# NEUE EUROPÄISCHE PATENTSCHRIFT

(11) **EP 2 585 713 B2**
(45) Veröffentlichungstag und Bekanntmachung des Hinweises auf die Entscheidung über den Einspruch: **16.05.2018**
(45) Hinweis auf die Patenterteilung: 18.06.2014
(21) Anmeldenummer: 11729373.8
(22) Anmeldetag: 17.06.2011
(51) Int. Cl.: F03D 11/00, F03D 1/06

(54) **ROTORBLATTENTEISUNG**
ROTOR BLADE DE-ICING
DÉGIVRAGE DE PALE DE ROTOR

(30) Priorität: 24.06.2010 DE 102010030472
(43) Veröffentlichungstag der Anmeldung: 01.05.2013
(73) Patentinhaber: Senvion GmbH, 22297 Hamburg (DE)
(72) Erfinder: WEITKAMP, Roland, 49090 Osnabrück (DE); QUELL, Peter, 24783 Osterrönfeld (DE)
(74) Vertreter: Wallinger Ricker Schlotter Tostmann
(86) Internationale Anmeldenummer: PCT/EP2011/002994
(87) Internationale Veröffentlichungsnummer: WO 2011/160793

(56) Entgegenhaltungen:
- EP-A1- 1 375 913
- EP-A2- 1 788 239
- EP-A2- 2 159 414
- EP-A2- 2 561 221
- EP-B1- 0 842 360
- WO-A1-03/087572
- WO-A2-2008/071195
- WO-A2-2008/086805
- WO-A2-2011/131522
- DE-A1- 19 621 485
- DE-U1- 20 014 238
- GB-A- 9 851
- US-A- 2 320 870
- US-A- 2 510 170
- US-A- 2 556 736
- US-A- 4 295 790
- US-A1- 2005 242 233
- US-B1- 6 676 122
- US-B2- 7 217 091

## Beschreibung

Die Erfindung betrifft ein Rotorblatt einer Windenergieanlage mit einem ersten und einem zweiten innen im Rotorblatt verlaufenden Kanal zum Durchleiten eines Luftstroms. Die Erfindung betrifft ferner ein Verfahren zum Enteisen eines Rotorblatts einer Windenergieanlage, wobei das Rotorblatt einen ersten und einen zweiten Kanal innen im Rotorblatt zum Durchleiten eines Luftstromes aufweist, wobei der Luftstrom einen erwärmten Luftstrom umfasst, der in den ersten Kanal eingeleitet wird und wenigstens abschnittsweise in Richtung von der Rotorblattwurzel zur Rotorblattspitze in einer vorgebbaren Strömungsführung strömt und zum Enteisen wenigstens eines Abschnitts des Rotorblatts an wenigstens einem Teil einer Außenwand des Rotorblatts entlangströmt, wobei der Luftstrom, nachdem dieser abgekühlt wurde, durch den zweiten Kanal zur Rotorblattwurzel zurückgeführt wird.

Rotorblätter mit Vorrichtungen, die zur Enteisung der Rotorblätter dienen, und entsprechende Verfahren zur Enteisung von Rotorblättern sind bekannt. Hierzu wird beispielsweise auf die US 7 217 091 B2 verwiesen, bei der mittels eines Warmluftgebläses warme Luft in einem Kanal an der Rotorblattnase entlanggeführt wird, dort durch die Umgebungsluft und die Temperatur des Rotorblattschalenmaterials an der Nase abgekühlt wird und nach einem Durchleiten von der Rotorblattwurzel bis zur Rotorblattspitze in einem weiteren Kanal, der den vorderen Kanal im Wesentlichen vollständig umgibt und in Richtung der Blatthinterkante angeordnet ist, zurückströmt. Der zurückgeführte Luftstrom wird wieder durch ein Heizelement erhitzt und in den Strömungsumlauf zurückgeschickt. Hierbei wird die Temperatur des erhitzten Luftstromes eingestellt.

Aus EP 0 842 360 B1 ist ferner ein Verfahren zum Enteisen eines Rotorblatts einer Windenergieanlage bekannt, das miteinander kommunizierende Röhren aufweist, durch die ein gegebenenfalls zuvor erwärmtes Wärmeträgermedium geleitet wird, wobei das erwärmte Wärmeträgermedium nach Durchströmen eines blattnasenseitigen Hohlraumes mit entsprechender Wärmeabgabe an Bereiche der Blattwand in einem blatthinterkantenseitigen Hohlraum gelenkt und daraus abgeleitet wird.

DE 196 21 485 A1 und EP 1 375 913 A1 zeigen eine Rotorblatt-Heizung für Windkraftanlagen, um eine Enteisung von Rotorblättern zu ermöglichen.

Es ist Aufgabe der vorliegenden Erfindung, eine effizientere Rotorblattenteisung vorzusehen.

Gelöst wird diese Aufgabe durch ein Rotorblatt einer Windenergieanlage mit einem ersten und einem zweiten innen im Rotorblatt verlaufenden Kanal zum Durchleiten eines Luftstroms, wobei eine

Trennvorrichtung vorgesehen ist, die die Kanäle voneinander trennt, so dass der erste Kanal an einer ersten Seite der Trennvorrichtung zur Druckseite des Rotorblatts angeordnet ist und der zweite Kanal an einer zweiten Seite der Trennvorrichtung zur Saugseite des Rotorblatts angeordnet ist.

Durch das erfindungsgemäße Rotorblatt ist eine effizientere Enteisung des Rotorblatts ermöglicht, da eine geringere Fläche der Außenschalung des Rotorblatts mit warmer Luft beaufschlagt werden kann, so dass auch bei niedriger Heizleistung eine effiziente Enteisung möglich ist. Vorzugsweise sind der erste und der zweite Kanal miteinander verbunden, und zwar insbesondere im Bereich der Rotorblattspitze. Einer der beiden Kanäle dient zur Zuführung warmer Luft in Richtung der Rotorblattspitze, und zwar von der Rotorblattwurzel ausgehend, und der andere Kanal zur Rückführung abgekühlter Luft. Beispielsweise kann im Bereich der Rotorblattwurzel oder im Bereich einer Rotornabe eines Rotors mit entsprechenden Rotorblättern einer Windenergieanlage ein Heißluftgebläse oder ein Ventilator mit einer Heizung vorgesehen sein, das oder der mit den entsprechenden Kanälen verbunden ist. Insbesondere ist es bevorzugt, wenn der Zuluftkanal, also der erste oder zweite Kanal, der zur Zuführung warmer Luft in Richtung der Rotorblattspitze von der Rotorblattwurzel ausgehend vorgesehen ist, mit einem entsprechenden Ventilator verbunden ist.

Vorzugsweise ist oder umfasst die Trennvorrichtung wenigstens abschnittsweise eine Trennwand, die im Wesentlichen in Längserstreckung des Rotorblatts und quer zu einem Steg des Rotorblatts angeordnet ist, wobei sich der Steg von der Saugseite zur Druckseite des Rotorblatts erstreckt und im Wesentlichen in Längserstreckung des Rotorblatts angeordnet ist. Hierdurch ist eine sehr gute Trennung des ersten und des zweiten Kanals zur Saugseite bzw. zur Druckseite des Rotorblatts möglich. Insbesondere ist eine derartige Trennvorrichtung einfach in der Fertigung. Vorzugsweise sind die Kanäle Luftleitkanäle, die eine warme und im Laufe der Luftströmung abgekühlte Luftströmung führen.

Vorzugsweise weist der erste Kanal und/oder der zweite Kanal eine Außenwand des Rotorblatts als Wand auf, und/oder der erste Kanal und/oder der zweite Kanal weisen wenigstens eine Öffnung in einer Wand des ersten und/oder zweiten Kanals auf, die eine Verbindung zu einem dritten Kanal ermöglicht, wobei der dritte Kanal eine Außenwand des Rotorblatts als Wand aufweist. Hierdurch ist eine sehr effiziente Erwärmung der Außenwand, insbesondere zur Nase des Rotorblatts möglich. Bei der Außenwand handelt es sich insbesondere um eine Rotorblattschale bzw. einen Teil der Rotorblattschale. Bei der Außenwand, die als Wand des ersten, zweiten und/oder dritten Kanals vorgesehen ist, handelt es sich vorzugsweise um eine Außenwand bzw. Wand bzw. Schalung des Rotorblatts im Nasenbereich des Rotorblatts.

Besonders bevorzugt ist eine Ausführungsform, bei der der erste Kanal und/oder der zweite Kanal zwischen zwei Stegen des Rotorblatts angeordnet ist, wobei die Stege im Wesentlichen in Längserstreckung des Rotorblatts angeordnet sind und sich jeweils von der Druckseite zur Saugseite des Rotorblatts erstrecken. Bei dieser besonders bevorzugten Variante des erfindungsgemäßen Rotorblatts ist es möglich, ohne große Wärmeverluste erwärmte Luft zur Rotorblattspitze bzw. zum Außenbereich des Rotorblatts zu führen, also den Bereich des Rotorblatts, der entfernt von der Rotorblattwurzel vorgesehen ist. Insbesondere ist es bevorzugt, wenn wenigstens eine Wand des ersten oder des zweiten Kanals wenigstens abschnittsweise wärmeisoliert ausgebildet ist. Hierdurch ist eine Zuleitung einer erwärmten Luftströmung in die Bereiche möglich, die enteist werden sollen, ohne dass zu große Wärmeverluste auftreten. Vorzugsweise sind zwei oder mehr Wände, insbesondere vorzugsweise alle Wände des ersten oder zweiten Kanals wärmeisoliert ausgebildet. Unter einer wärmeisolierten Ausbildung ist insbesondere zu verstehen, dass eine entsprechende Wärmedämmung vorgesehen ist, wobei eine Wärmeleitfähigkeit, insbesondere bevorzugt von unterhalb 0,11 W/(m·K), vorgesehen ist.

Vorzugsweise ist im Bereich der Nase des Rotorblatts das Schalenmaterial des Rotorblatts mit wärmeleitfähigem Material durchsetzt. Beim Schalenmaterial handelt es sich vorzugsweise um glasfaserverstärkten Kunststoff oder ähnliches im Bau für Rotorblätter von Windenergieanlagen verwendetes Material. Um eine Enteisung zu beschleunigen und einen guten Wärmeübergang von dem warmen Luftstrom innen im Rotorblatt bzw. in einem Kanal im Rotorblatt nach außen zum Eis zu ermöglichen, wird entsprechend ein wärmeleitfähiges Material verwendet, das das Schalenmaterial des Rotorblatts durchsetzt. Unter wärmeleitfähigem Material wird ein Material verstanden, das eine Wärmeleitfähigkeit hat, die mindestens doppelt so groß ist wie die Wärmeleitfähigkeit des Schalenmaterials. Vorzugsweise ist die Wärmeleitfähigkeit des wärmeleitfähigen Materials mindestens zehnmal, vorzugsweise fünfzigmal so groß wie die des Schalenmaterials.

Vorzugsweise findet ein leichtes Metall Verwendung wie beispielsweise Aluminium. Es kann auch ein wärmeleitfähiges Schalenmaterial Verwendung finden wie beispielsweise Graphit- oder Kevlarfasermatten. Vorzugsweise geschieht die Durchsetzung durch Fasern oder Drähte, die quer zum Schalenmaterial das Schalenmaterial vollständig durchsetzen. Die Wärmeleitfähigkeit liegt vorzugsweise bei über 10 W/(m·K). Unter der Begrifflichkeit, dass das Schalenmaterial mit wärmeleitfähigem Material durchsetzt ist, wird insbesondere im Rahmen der Erfindung verstanden, dass das Schalenmaterial wenigstens teilweise aus diesem wärmeleitfähigen Material besteht und/oder Wärmebrücken von innen nach außen vorgesehen sind. Es kann auch sein, dass das Schalenmaterial mit einem entsprechenden hochleitfähigen Pulver oder Granulat versehen ist. Es könnte ferner auch ein wärmeleitfähiges Fasermaterial und/oder ein wärmeleitfähiges Harz zum Abbinden des glasfaserverstärkten Kunststoffes verwendet werden.

Vorzugsweise ist der erste und/oder der zweite Kanal beabstandet zu den Außenwänden des Rotorblatts angeordnet. Hierdurch kann wenigstens einer der Kanäle eine erwärmte Luftströmung aufnehmen, und mit relativ wenig Wärmeverlust zu den Stellen leiten, die zu erwärmen sind. Insbesondere können dann die Wände dieses Kanals wärmeisoliert bzw. wärmedämmend ausgebildet sein. Es ist insbesondere der Zuluftkanal beabstandet zu den Außenwänden des Rotorblatts. Wenn beide Kanäle beabstandet zu den Außenwänden des Rotorblatts sind, können beide Kanäle als Zuluftkanal verwendet werden, und zwar beispielsweise abwechselnd, so dass zunächst der erste Kanal als Zuluftkanal dient und der zweite Kanal als Abluftkanal bzw. Abförderkanal und zu einem anderen Zeitpunkt der zweite Kanal als Zuluftkanal und der erste Kanal als Abförderkanal. Der erste und/oder der zweite Kanal sind dann insbesondere als Kanäle ausgebildet, die eine erwärmte Luftströmung aufnehmen, die wenigstens abschnittsweise in Richtung der Rotorblattspitze die Luftströmung führt.

Die Aufgabe wird ferner durch ein Rotorblatt einer Windenergieanlage mit einem ersten und einem zweiten innen im Rotorblatt verlaufenden Kanal zum Durchleiten eines Luftstroms, gelöst, das bevorzugterweise die vorstehenden Merkmale des erfindungsgemäßen oder weitergebildeten Rotorblatts aufweist, wobei der erste und/oder der zweite Kanal eine Strömungsdrosselvorrichtung aufweist. Das Aufweisen einer Strömungsdrosselvorrichtung soll im Rahmen der Erfindung auch ein Vorhandensein einer Strömungsdrosselvorrichtung in einer Trennvorrichtung zwischen dem 1. und dem 2. Kanal umfassen.

Durch Vorsehen einer Strömungsdrosselvorrichtung in dem erfindungsgemäßen Rotorblatt ist es auf einfache Art und Weise möglich, die Strömungsgeschwindigkeit der Luftströmung, insbesondere des Warmluftstromes, auch in der Rotorblattspitze einzustellen bzw. vorzugeben. Wegen des Kontinuitätsgesetzes ist die Strömungsgeschwindigkeit der Luft aufgrund des abnehmenden Querschnitts zur Rotorblattspitze immer größer. Wenn, vorzugsweise auch zur Rotorblattwurzel hin, eine Strömungsdrosselvorrichtung vorgesehen ist, kann diese zur Vergleichmäßigung der Strömungsgeschwindigkeit des Luftstromes verwendet werden, so dass entsprechend eine geringere Luftströmgeschwindigkeit ermöglicht ist. Auf diese Weise ist es möglich, die Strömungsgeschwindigkeiten so einzustellen, dass auch im Außenbereich des Rotorblatts, also in Richtung der Rotorblattspitze, die Strömungsgeschwindigkeiten nicht zu stark ansteigen und trotzdem in allen Teilbereichen bzw. in jedem Rotorblattabschnitt bzw. in jedem Nasenabschnitt des Rotorblatts ein ausreichend großer Wärmeübertrag auf das Schalenmaterial bzw. die Außenwandung des Rotorblatts ermöglicht ist.

Vorzugsweise ist die Strömungsdrosselvorrichtung in einer Außenwand und/oder einer Innenwand des ersten und/oder zweiten Kanals vorgesehen. Eine Innenwand ist im Rahmen der Erfindung insbesondere eine Wand, die quer zur Strömungsrichtung in dem ersten und/oder dem zweiten Kanal angeordnet ist. Eine Außenwand des ersten und/oder des zweiten Kanals ist eine Wand, die den ersten und/oder den zweiten Kanal nach außen abgrenzt und in Strömungsrichtung des Luftstromes, insbesondere des Warmluftstromes, bzw. in Richtung der Längserstreckung des Rotorblatts angeordnet ist. Die Strömungsdrosselvorrichtung ist in einer Außenwand und/oder einer Innenwand des ersten und/oder zweiten Kanals vorgesehen, wobei die Strömungsdrosselvorrichtung beabstandet zu der Außenwand des Rotorblatts ist. Die Strömungsdrosselvorrichtung ist somit nicht in einer Außenwand des Rotorblatts angeordnet.

Erfindungsgemäß weist die Strömungsdrosselvorrichtung eine Luftstromdurchtrittsfläche auf, die einstellbar ist. Hierdurch können auch im Betrieb der Windenergieanlage die Strömungsgeschwindigkeit bzw. allgemein die Strömungsverhältnisse in dem Rotorblatt eingestellt werden. Dieses kann bevorzugt dazu verwendet werden, abschnittsweise eine Erwärmung der Rotorblattnase oder anderer Teile des Rotorblatts vorzusehen. Insbesondere kann beispielsweise die Rotorblattnase zunächst im Bereich der Rotorblattspitze enteist werden, dann ein mittlerer Bereich und dann ein rotorblattwurzelseitiger Bereich. Es kann auch vorgesehen sein, Detektoren in verschiedenen Abschnitten des Rotorblatts vorzusehen, um dann genau dort eine Enteisung vorzusehen, bei der eine Vereisung vorliegt.

Die Aufgabe wird ferner durch ein Verfahren zum Enteisen eines Rotorblatts einer Windenergieanlage gelöst, wobei das Rotorblatt einen ersten und einen zweiten Kanal innen im Rotorblatt zum Durchleiten eines Luftstromes aufweist, wobei der Luftstrom einen erwärmten Luftstrom umfasst, der in den ersten Kanal eingeleitet wird und wenigstens abschnittsweise in Richtung von der Rotorblattwurzel zur Rotorblattspitze in einer vorgebbaren Strömungsführung strömt und zum Enteisen wenigstens eines Abschnitts des Rotorblatts an wenigstens einem Teil einer Außenwand des Rotorblatts entlangströmt, wobei der Luftstrom, nachdem dieser abgekühlt wurde oder ist, durch den zweiten Kanal zur Rotorblattwurzel zurückgeführt wird, das dadurch weitergebildet ist, dass die Strömungsgeschwindigkeit des Luftstroms in dem Abschnitt eingestellt und/oder vorgegeben wird oder ist, wobei die Strömungsführung im Betrieb der Windenergieanlage verändert wird. Durch Vorsehen einer eingestellten oder vorgegebenen Strömungsgeschwindigkeit des Luftstroms in dem jeweiligen Abschnitt bzw. in dem Rotorblatt ist eine effiziente Enteisung des Rotorblatts möglich, und zwar insbesondere auch in der Rotorblattspitze, da so auch in der Rotorblattspitze durch Einstellen einer ausreichend geringen Geschwindigkeit der Luftströmung dort eine effiziente Enteisung möglich ist.

Vorzugsweise wird die Strömungsgeschwindigkeit und die Strömungsführung im Betrieb der Windenergieanlage verändert. Die Veränderung geschieht hierbei vorzugsweise zeitlich abhängig oder in Abhängigkeit des tatsächlichen Vereisungszustandes der entsprechenden Abschnitte des Rotorblatts. Die Strömungsgeschwindigkeit und/oder die Strömungsführung kann insbesondere im Betrieb der Windenergieanlage unterschiedlich eingestellt werden, um verschiedene Räume oder Abschnitte bzw. verschiedene Bereiche der Außenwand des Rotorblatts zu unterschiedlichen Zeiten zu erwärmen, um eine Enteisung vorzusehen.

Vorzugsweise werden in Längserstreckung des Rotorblatts hintereinander angeordnete Abschnitte des Rotorblatts zu unterschiedlichen Zeiten erwärmt. Vorzugsweise wird der Nasenbereich des Rotorblatts erwärmt, da der Nasenbereich typischerweise der Bereich ist, der am stärksten von Vereisung betroffen ist.

Vorzugsweise sind in den Kanälen und/oder zwischen den Kanälen

Strömungsdrosselvorrichtungen vorgesehen, deren Durchtrittsflächen eingestellt werden. Bei den Kanälen handelt es sich um den ersten, den zweiten und/oder den dritten Kanal. Die Größe der Durchtrittsflächen, die auch als Luftstromdurchtrittsflächen bezeichnet werden können, kann vorzugsweise teilweise gleich groß sein. Es können auch alle Durchtrittsflächen gleich groß sein. Je nach Bedarf können diese allerdings auch unterschiedlich groß ausgestaltet sein. Die Luftstromdurchtrittsflächen können auch teilweise verschlossen werden, beispielsweise dann, wenn nicht das gesamte Rotorblatt an der Rotorblattnase erwärmt werden soll und auch nicht über die gesamte Längserstreckung des Rotorblatts die Rotorblattnase erwärmt werden soll, sondern eben abschnittsweise eine Erwärmung stattfinden soll.

Vorzugsweise wird wenigstens zeitweise, insbesondere in vorgebbaren Zeitabständen, der erwärmte Luftstrom in den zweiten Kanal eingeleitet und wenigstens abschnittsweise in Richtung von der Rotorblattwurzel zur Rotorblattspitze geströmt, wobei der Luftstrom, nachdem dieser abgekühlt wurde oder ist, durch den ersten Kanal zur Rotorblattwurzel zurückgeführt wird. Durch diese Maßnahmen werden der Luftstromvorlauf bzw. der Zustrom der erwärmten Luft und der Rücklauf zeitweise vertauscht. Damit findet eine zeitweise Umkehrung der Strömungsrichtung statt. Hierdurch können große Differenzen zwischen der Vorlauftemperatur und der Rücklauftemperatur möglich sein, da die Erwärmung des Rotorblattmaterials nur kurzzeitig stattfindet. Hierdurch können größere Wärmemengen mit kleinen Strömungsquerschnitten ermöglicht sein.

Außerdem ist es so möglich, die an den Kanal 1 und Kanal 2 grenzenden Aussenflächen des Rotorblatts nacheinander zu enteisen. Bevorzugt beträgt die Vorlauftemperatur etwa 60°C. Höhere Temperaturen sind zwar wünschenswert, um große Rotorblätter mit mehr als 50 m Länge zu enteisen, aber spätestens ab 80°C erlaubt die begrenzte Temperaturfestigkeit von üblichen Rotorblattwerkstoffen nur noch sehr kurze Heizzyklen.

Die erste Luftstromdurchtrittsöffnung kann beispielsweise ca. 30 m von der Rotorblattwurzel aus vorgesehen sein. Die Rücklauftemperatur kann bei 10°C liegen. Die Strömungsgeschwindigkeit liegt vorzugsweise bei 10 m/s. Die Heizleistung liegt bei 20 kW. Im Rahmen der Erfindung kann der erste Kanal auch der zweite Kanal sein und umgekehrt.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische "gläserne" dreidimensionale Darstellung eines erfindungsgemäßen Rotorblatts,
- Fig. 2: eine Schnittdarstellung durch ein erfindungsgemäßes Rotorblatt in der Nähe der Rotorblattwurzel,
- Fig. 3: eine schematische Schnittdarstellung durch ein erfindungsgemäßes Rotorblatt in der Nähe der Rotorblattspitze,
- Fig. 4: eine schematische "gläserne" dreidimensionale Darstellung eines Teils eines erfindungsgemäßen Rotorblatts in einer weiteren Ausführungsform,
- Fig. 5: eine dreidimensionale schematische "gläserne" Darstellung einer weiteren Ausführungsform eines Teils eines erfindungsgemäßen Rotorblatts,
- Fig. 6: eine schematische Draufsicht auf einen Teil eines erfindungsgemäßen Rotorblatts in einer weiteren Ausführungsform im Schnitt,
- Fig. 7: den Teil des erfindungsgemäßen Rotorblatts aus Fig. 6 in einer schematischen Seitenansicht von der Blattnase aus gesehen,
- Fig. 8: eine schematische Schnittdarstellung durch eine in einem Steg angeordnete Strömungsdrosselvorrichtung und
- Fig. 9: eine dreidimensionale schematische "gläserne" Darstellung eines Teils eines erfindungsgemäßen Rotorblatts in einer weiteren Ausführungsform.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

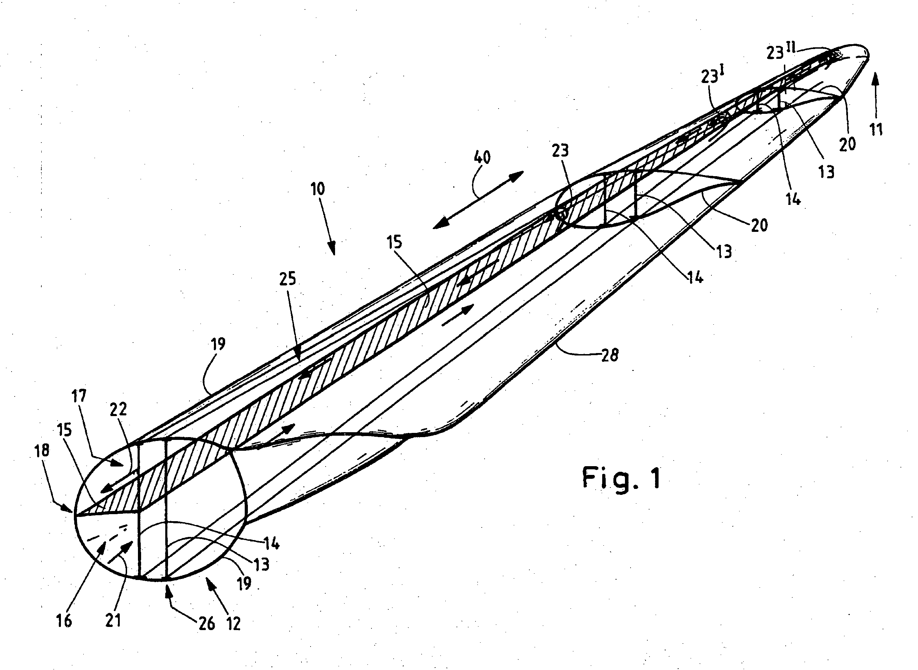

Fig. 1 zeigt schematisch in einer "gläsernen" dreidimensionalen Darstellung ein erfindungsgemäßes Rotorblatt 10 mit einer Rotorblattspitze 11 und einer Rotorblattwurzel 12. Das Rotorblatt 10 weist eine Saugseite 25 und eine Druckseite 26 auf. Entsprechend ist das Rotorblatt mit einer Außenwand 19 versehen, die den inneren Bereich von dem äußeren Bereich trennt. Die Außenwand wird üblicherweise auch als Schale bezeichnet und ist aus einem Schalenmaterial wie beispielsweise glasfaserverstärktem Kunststoff gefertigt. Zur Verstärkung der Festigkeit des Rotorblatts sind zwei Stege 13 und 14 vorgesehen, die in Längserstreckung 40 des Rotorblatts sich von der Saugseite 25 zur Druckseite 26 erstrecken und an dem Schalenmaterial bzw. der Außenwand 19 des Rotorblatts 10 verklebt sind. In dem Rotorblatt 10 sind entsprechende Profile 20 dargestellt, die die Querschnittsform des Rotorblatts 10 zeigen sollen.

In Längserstreckung 40 des Rotorblatts 10 und quer zur Erstreckung der Stege 13 bzw. 14 ist eine Trennwand 15 vorgesehen, die einen ersten Kanal 16 und einen zweiten Kanal 17 voneinander trennt. Es kann nun ein Warmluftstrom 21 in den ersten Kanal 16 eingebracht werden, wie Pfeile in Richtung Rotorblattspitze zeigen. Dieser Warmluftstrom dient dazu, etwaiges Eis an der Rotorblattnase 18 durch Wärme zu schmelzen, so dass entsprechend Eis von dem Rotorblatt 10 abfallen kann. Auf dem Weg zur Rotorblattspitze 11 kühlt der Warmluftstrom von beginnend bei 60°C auf 10°C beispielsweise ab, so dass ein Kaltluftstrom 22 an der Rotorblattwurzel 12 wieder zurückgeführt wird. Zudem sind Öffnungen 23, 23' und 23" in der Trennwand 15 vorgesehen, um den Warmluftstrom von dem ersten Kanal in den zweiten Kanal überzuleiten. Durch Vorsehen der Öffnungen 23, 23' und 23" findet eine Vergleichmäßigung der Strömungsgeschwindigkeit statt. Die Öffnungen 23 bis 23" können mit beispielsweise hier nicht dargestellten Drosselklappen einstellbar gestaltet sein. Dieses ist allerdings nicht unbedingt notwendig, um eine Vergleichmäßigung der Strömungsgeschwindigkeit vorzusehen. Das Vorsehen von entsprechenden Drosselklappen hat andere bzw. weitere Vorteile, die unter Bezugnahme auf die weiteren Figuren beschrieben werden. Zur besseren Veranschaulichung ist zudem noch die Endkante 28 des Rotorblatts 10 in Fig. 1 eingezeichnet.

Gemäß dem Ausführungsbeispiel gemäß Fig. 1 werden ein saug- und ein druckseitenseitiger Hohlraum bzw. Kanal im Rotorblatt 10 bereitgestellt, die als Vorlauf- und Rücklauf für Warmluft genutzt werden. Insbesondere der Vorlaufkanal wird bezüglich der Querschnittsgeometrie und Anordnung im Rotorblatt vorzugsweise so optimiert, dass ein minimaler Wärmeverlust entsteht, um die vereiste Blattnase effizient zu erwärmen. Hierzu wird zum einen die Querschnittsfläche, in vorzugsweise jedem Schnitt des Rotorblatts, so gewählt, dass die sich ergebende Strömungsgeschwindigkeit ein optimaler Kompromiss zwischen hoher Geschwindigkeit zur Reduzierung der Wärmeabgabe und niedriger Geschwindigkeit zur Minimierung der Reibungsverluste darstellt. Die Dimensionierung erfolgt durch thermodynamische Auslegung unter Berücksichtigung der Wärmeverluste über die Kanalwände und der Strömungsverluste durch die Kanalgeometrie sowie der Wärmeabgabe über die zu heizende Blattnase. Es ist außerdem, wie in den folgenden Figuren noch dargestellt ist, eine Unterteilung in mehrere Abschnitte vorgesehen, um auch bei großen Blattlängen, beispielsweise von über 40 m ausreichend warme Luft in alle kritischen Blattbereiche bereitzustellen.

Fig. 1 sieht den Einbau einer im Wesentlichen parallel zur Profilsehne verlaufenden Trennwand 15 zwischen der Rotorblattnase 18 und etwa der Mitte des vorderen Schubstegs 14 vor. Die Trennwand 15 kann, wie die Stege 13 und 14 als Sandwich mit hoher Wärmeisolation ausgeführt sein oder alternativ mit geringstmöglichem Bauaufwand aus flexiblem Material, beispielsweise einer LKW-Plane oder, falls die Temperaturbeständigkeit nicht ausreicht, aus einem Heißluftballon-Hüllengewebe.

Der Vorlauf wird bevorzugt dort ausgeführt, wo geringere Wärmeverluste an die Kanalwände zu erwarten sind, um eine ausreichende Wärmemenge an der Blattnase im Außenbereich des Blattes bereitstellen zu können. Die Querschnittsflächen von Vor- und Rücklauf werden bevorzugt in etwa ähnlich sein. Für den Vorlauf ist aber eine thermodynamische Optimierung besonders sinnvoll.

Vorzugsweise sind auf der Gesamtlänge des Rotorblatts 10 mehrere Durchlässe bzw. Öffnungen 23-23" in der Trennwand vorgesehen, um eine Vergleichmäßigung des Temperaturverlaufs über die Blattlänge zu erzielen. Bevorzugt wird im Blattaußenbereich bei der Blattspitze jedoch eine höhere Rücklauftemperatur eingestellt als im Innenbereich bei der Blattwurzel, da dort die Vereisung weniger kritisch ist.

Vorzugsweise sind in den Durchlässen bzw. Öffnungen 23-23" verstellbare Drosselklappen vorgesehen, die eine individuelle Einstellung der Temperatur in den einzelnen Abschnitten für jedes Rotorblatt ermöglicht. Zudem können die Drosselklappen dazu dienen, in Abhängigkeit vom Betriebszustand eingestellt zu werden. Die Einstellungen können sich nämlich bei Stillstand, beim Trudeln oder im Produktionsbetrieb unterscheiden. Insbesondere beim Produktionsbetrieb wird im Blattaußenbereich eine besonders große Wärmemenge benötigt, da die Abkühlung durch die hohe Strömungsgeschwindigkeit der Außenluft am Größten ist. Dies kann durch eine hohe Vorlauftemperatur und/oder eine mittlere bzw. nicht zu hohe Strömungsgeschwindigkeit im Bereich der Blattnase erreicht werden, um einen möglichst hohen Wärmeübergang zu ermöglichen. Es können auch die Umgebungsbedingungen wie die Außentemperatur, die Windgeschwindigkeit und -richtung und Niederschlag usw. berücksichtigt werden, um die Drosselklappen einzustellen.

Ferner ist eine nur abschnittsweise Blattheizung, wie insbesondere in den folgenden Figuren noch dargestellt wird, möglich, falls die bereitgestellte Heizenergie aufgrund der Randbedingungen, weil beispielsweise die Heizung schon im Volllastbetrieb ist, nicht für die Enteisung des gesamten Rotorblatts ausreicht. Außerdem kann im Stillstand bei einer Enteisung bei besonders ungünstigen Bedingungen dieses notwendig sein, z.B. bei extremer Kälte mit hohen Windgeschwindigkeiten. In diesem Fall kann die Enteisung dann nacheinander für die einzelnen Abschnitte erfolgen.

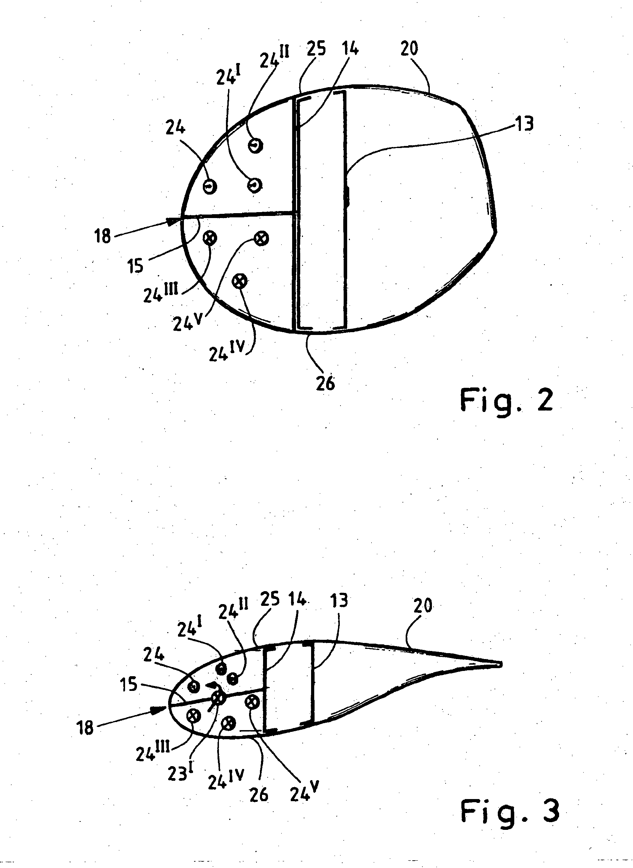

Fig. 2 zeigt einen schematischen Schnitt durch ein erfindungsgemäßes Rotorblatt in der Ausführungsform nach Fig. 1. Die Strömungsrichtung des Luftstromes ist mit Strömungspfeilen 24-24^{V} durch Kreuze (in das Zeichnungsblatt hinein) und Punkte (aus dem Zeichnungsblatt heraus) dargestellt.

Fig. 3 zeigt ein weiteres Profil, das näher zur Rotorblattspitze 11 als Fig. 2 vorgesehen ist, in schematischer Darstellung. Hier ist zusätzlich zu den Strömungspfeilen 24-24^{V} noch eine Öffnung 23' dargestellt, die in der Trennwand 15 vorgesehen ist. Zu erkennen ist hier eine Drosselklappe, die aufgestellt ist, und ein entsprechender Luftstrom ist durch einen Pfeil dargestellt, der andeutet, dass der Warmluftstrom durch diese Öffnung 23' hindurchtritt, und zwar vom ersten Kanal in den zweiten Kanal.

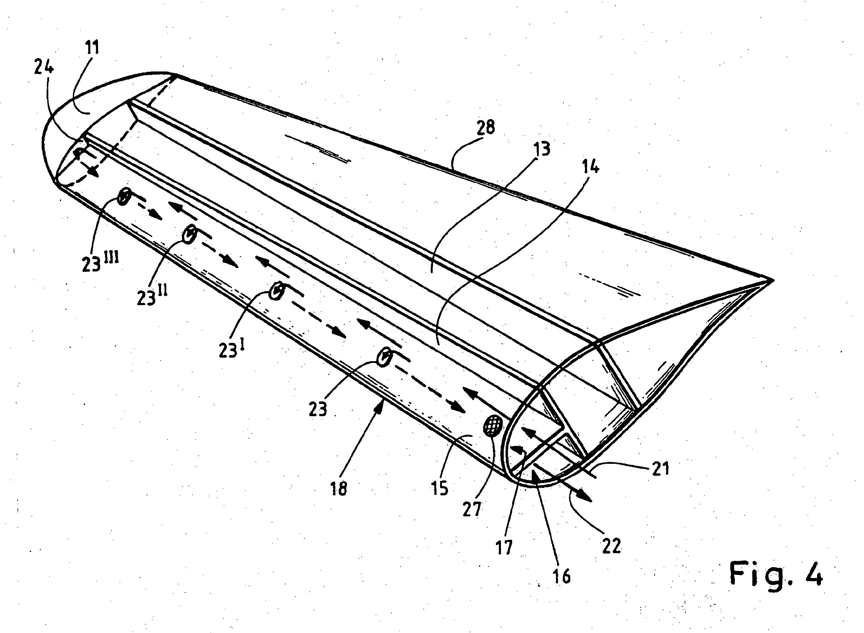

Fig. 4 zeigt einen Teil eines erfindungsgemäßen Rotorblatts in einer weiteren Ausführungsform, die ähnlich zu der Ausführungsform nach den Figuren 1 bis 3 ist, in einer schematischen dreidimensionalen und gläsernen Darstellung. Auch hier ist die Trennwand 15 gezeigt und entsprechende Öffnungen 23-23'", die in der Trennwand 15 vorgesehen sind. Es ist auch die entsprechende Luftströmung 21 bzw. 22 dargestellt.

Es wird ein Warmluftstrom 21 in dem oberen Kanal, der der zweite Kanal 17 ist, eingeleitet und gelangt als Kaltluftstrom 22 in den unteren Kanal, der der erste Kanal 16 ist, zurück. Der Kaltluftstrom ist gestrichelt dargestellt. Der Warmluftstrom 21 gelangt über die entsprechenden Öffnungen 23-23'" aus dem zweiten Kanal 17 in den ersten Kanal 16. Außerdem ist in der Blattspitze eine Öffnung 24 vorgesehen, über die auch ein Überströmen des Warmluftstroms 21 aus dem zweiten Kanal 17 in den ersten Kanal 16 ermöglicht ist. Zudem ist hier eine geschlossene Drosselklappenvorrichtung 27 dargestellt, die dafür sorgt, dass ein Strömen des Warmluftstromes 21 von dem zweiten Kanal 17 in den ersten Kanal 16 erst in einem Abschnitt erfolgt, der näher zur Rotorblattspitze angeordnet ist.

Die Öffnungen 23-23'" können auch mit entsprechenden Drosselklappenvorrichtungen versehen sein, die hier allerdings nicht dargestellt sind. Der Abstand nach außen zur Rotorblattspitze 11 hin kann hierbei bevorzugt abnehmend ausgestaltet sein. Durch den bevorzugt abnehmend ausgestalteten Abstand wird der, insbesondere starken, Verjüngung der verfügbaren Strömungsquerschnitte im Außenbereich des Rotorblattes, also zur Rotorblattspitze hin, ausreichend Rechnung getragen. Hierbei ist der Abstand der Öffnungen 23-23'" bzw. der entsprechenden Drosselklappenvorrichtungen 27 gemeint.

Die Strömungsrichtung in Fig. 4 ist umgekehrt zu der in Fig. 1 dargestellten Strömungsrichtung. Ein entsprechendes Umschalten der Strömungsrichtung kann in einer besonders vorteilhaften Ausführungsform durch ein Klappensystem oder einen verstellbaren bzw. in der Drehrichtung umschaltbaren oder verschwenkbaren Ventilator oder Lüfter im Bereich der Blattwurzel oder Rotornabe ermöglicht sein. Hierdurch können die Oberseite und Unterseite der Blattnase effizient enteist werden. Die Enteisung kann auch abwechselnd bzw. alternierend geschehen.

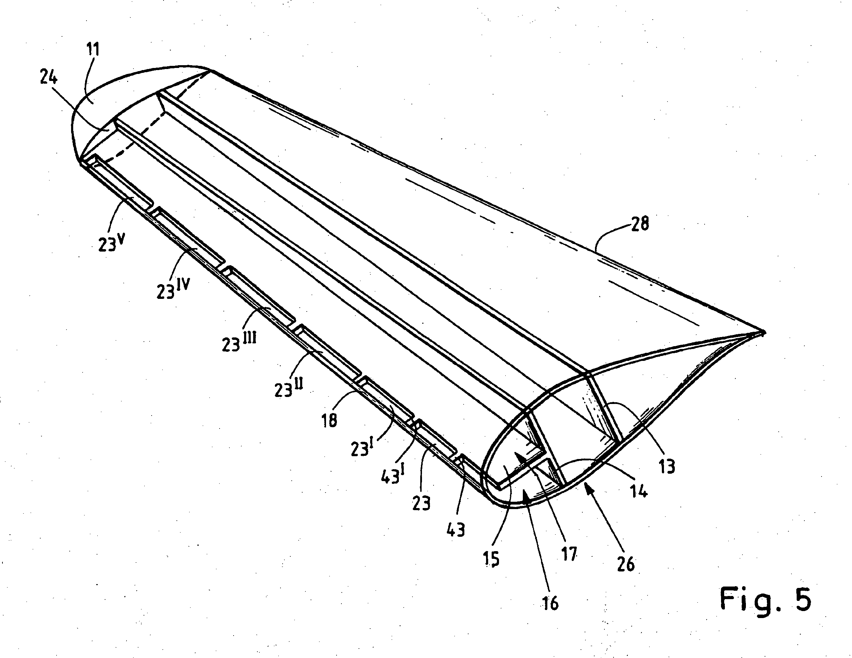

Eine alternative Möglichkeit ist in Fig. 5 dargestellt, bei der im Blattnasenbereich entsprechende Öffnungen 23-23"', die als Schlitze ausgebildet sind, vorgesehen sind. Getragen wird dann die Trennwand 15 durch entsprechende Halterippen 43, 43', die beispielsweise in der Blattunterschale, also in diesem Fall der Druckseite verklebt sein können. Die Fig. 5 zeigt beispielsweise die äußeren 30% der Länge des gesamten Rotorblatts. Die Schlitzbreite der Öffnungen 23-23^{V} kann gleich sein oder variiert werden. Zwischen den Öffnungen sind Halterippen 43, 43' vorgesehen.

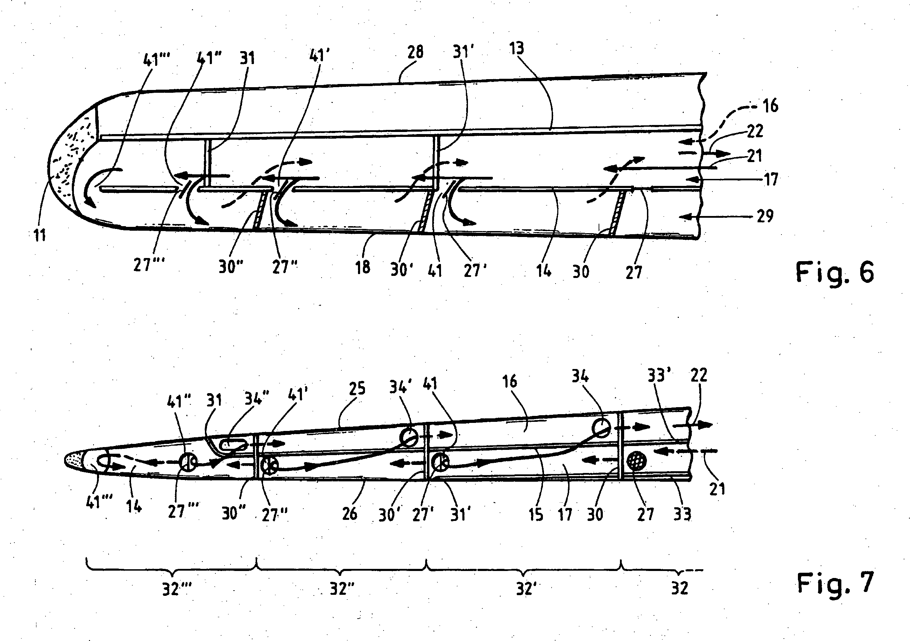

Eine weitere sehr bevorzugte Ausführungsform ist in den Figuren 6 und 7 dargestellt. Fig. 6 zeigt eine Draufsicht auf einen entsprechenden Abschnitt auf ein erfindungsgemäßes Rotorblatt in einer schematischen Darstellung und Fig. 7 eine entsprechende Seitenansicht auf die Nase, also eine Ansicht von vorne.

In diesem Ausführungsbeispiel sind insgesamt drei Kanäle vorgesehen, wobei der erste und der zweite Kanal 16 und 17 von der Rotorblattnase 18 des Rotorblatts 10 beabstandet sind. Der erste Kanal 16 und der zweite Kanal 17 sind zwischen den Stegen 13 und 14 angeordnet. Der erste Kanal 16 dient als Kaltluftstromabförderkanal und ist in dem Ausführungsbeispiel der Figuren 6 und 7 oberhalb von dem Warmluftstromzuförderkanal 17, also dem zweiten Kanal 17, vorgesehen.

In Fig. 6 ist der erste Kanal 16 selbst nicht dargestellt, sondern nur der Kaltluftstrom 22, der in den ersten Kanal 16 strömt, also oberhalb des Warmluftstroms 21 und damit oberhalb der Zeichnungsebene angedeutet ist. Im zweiten Kanal 17, der als Warmluftstromzuführkanal dient, sind die Ausläufe der Kanalwände 33 bzw. 33' aus Fig. 7 projiziert und mit 31 und 31' bezeichnet. Es handelt sich hierbei somit um entsprechende Auslaufkanten bzw. Kanten 31 und 31'. In dem Steg 14 sind mehrere Drosselklappenvorrichtungen 27-27'" vorgesehen, die zum Einleiten des Warmluftstroms in einen dritten Kanal, nämlich den Nasenkanal 29, vorgesehen sind.

Durch diese spezielle Ausführungsform können wärmeisolierende Materialien als Außenwände des zweiten Kanals 17 vorgesehen sein, so dass ohne wesentliche Wärmeverluste ein Warmluftstrom in den Nasenbereich des äußeren Bereichs des Rotorblatts geleitet werden kann. Der Nasenbereich des Rotorblatts 10 ist in diesem Beispiel in vier Abschnitte 32-32"" aufgeteilt. Auf diese Weise ist es möglich, durch Verschließen oder Öffnen der Drosselklappenvorrichtungen 27-27'" eine effiziente, und insbesondere auch sequentielle, Erwärmung der jeweiligen Abschnitte 32-32"" vorzusehen.

Nach dem Zuleiten des Warmluftstroms in den Nasenkanal 29 wird dieser dann, wie die gestrichelten Linien darstellen, durch Öffnungen 34-34" in den Abförderkanal bzw. den ersten Kanal 16 geleitet, um zur Rotorblattwurzel zu gelangen und dort beispielsweise wieder in den Luftstromkreislauf zurückgeführt werden zu können, beispielsweise in ein nicht in den Figuren dargestelltes Gebläse, das zusätzlich eine Heizvorrichtung vorsieht.

Entsprechend kann der Warmluftstrom durch die Öffnungen 41-41'" in den Nasenkanal 29 geführt werden, wobei die Öffnungen 41-41" mit entsprechenden Drosselklappen bzw. Drosselklappenvorrichtungen 27'-27'" verschlossen werden können.

Die Wandungen des Zulaufkanals aus den Figuren 6 und 7, also des zweiten Kanals 17, können bevorzugt wärmeisoliert oder wärmegedämmt sein. Die Stege 13 und 14 liegen üblicherweise schon als Sandwichstruktur vor. Die Zwischenwand 15 und die obere und untere Abschlusswand 33 können entsprechend auch in einer Sandwichstruktur ausgebildet sein. Durch die gezeigte Anordnung ist es möglich, den Zuluftkanal 17 über den Großteil der Rotorblattlänge (beispielsweise die inneren 80%) fern der kühlen Blattschale zu führen, so dass die Wärmeverluste minimal sind.

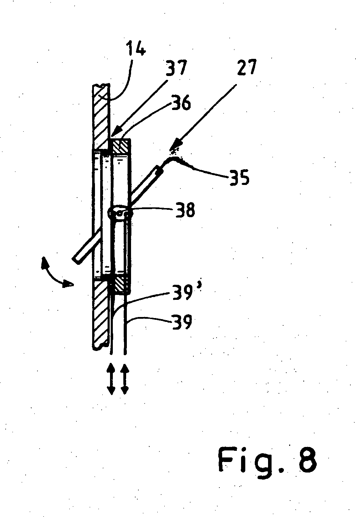

Fig. 8 zeigt schematisch in einer Schnittdarstellung eine entsprechende Drosselklappenvorrichtung 27, die in den Rotorblattsteg 14 mit einer Klebeverbindung 37 eingeklebt ist. Es ist ein entsprechender Flansch 36 vorgesehen, in den die Drosselklappe 35 eingebracht ist. Über einen Exzenter 38 und entsprechende Kevlarseile 39, 39' kann die Öffnung der Drosselklappenvorrichtung verstellt werden. Anstelle der Kevlarseile können auch andere Seile Verwendung finden oder eine Verstellung ohne Seile und nur mit beispielsweise Schrittmotoren, Pneumatikzylinder oder anderen Antrieben vorgesehen sein. Kevlarseile eignen sich allerdings sehr gut, da diese relativ reckfrei sind und wenig Gewicht aufweisen.

In einer einfachen Ausführungsform werden die Drosselklappen bzw. Drosselklappenvorrichtungen 27 nur einmal, beispielsweise manuell, für das spezielle Rotorblatt eingestellt, so dass eine gleichmäßige Erwärmung der Blattnase über die gesamte zu enteisende Blattlänge erzielt wird.

Bei einer Weiterentwicklung ist vorgesehen, die Drosselklappen im Betrieb zu verstellen. Die Aktivierung der Drosselklappen kann beispielsweise über nichtmetallische Kevlarseile oder Schubstangen wie beispielsweise glasfaserverstärkte Rohre, in einlaminierten Leerrohren erfolgen und unter Berücksichtigung der Signale von Eissensoren, z. B. über eine Thermokamera, eine Schwingungsanalyse oder Oberflächensensoren gezielt gesteuert werden.

In der Fertigung werden die erforderlichen Zusatz-Trennwände 15 bzw. 33 bevorzugt mit der Einbringung der Stege 13 und 14 in eine Schale des Rotorblatts eingebaut. Dabei kann die Blattschale entweder der Saugseite oder Druckseite gewählt werden, die eine günstigere Geometrie für die Nasenverklebung ermöglicht. Insbesondere kann die Trennwand 15 eine zusätzliche Klebelasche im Nasenbereich ersetzen und die Geometrie für die Blindverklebung verbessern.

Die erste Variante gemäß den Figuren 1 bis 5 weist den Vorteil eines relativ einfachen Aufbaus mit nur einer Trennwand auf. Es könnte allerdings möglich sein, dass der vordere Steg 14 im Außenbereich zum Vorsehen eines ausreichend großen Strömungsquerschnittes nach hinten zur Endkante 28 verlegt werden sollte. In diesem Fall sollte der hintere Steg 13 nach vorne verlegt werden, um den Schubmittelpunkt beizubehalten. Sofern eine Aufteilung des äußeren Blattbereichs in ausreichend viele Teilabschnitte vorgenommen wird, kann allerdings die unproblematische bisherige Konstruktion beibehalten werden, da so sehr kleine Strömungsquerschnitte der Blattnase ausreichend sind.

Im Betrieb könnte vorgesehen sein, den Vorlauf und den Rücklauf der Luftströmung durch eine entsprechende Klappenanordnung beim Ventilator im Blattwurzelbereich regelmäßig oder unregelmäßig, beispielsweise in Intervallen zwischen 1 Minute und 15 Minuten, zu vertauschen. Damit können erhebliche Differenzen zwischen der Vor- und Rücklauftemperatur zulässig sein, was insbesondere die Bereitstellung größerer Wärmemengen mit kleinen Strömungsquerschnitten ermöglicht. Die Vorlauftemperatur könnte dann beispielsweise bei bis zu 100°C liegen.

Bei der Variante gemäß den Figuren 6 und 7 ist ein deutlich reduzierter Aufwand bei der Integration in die Blattstruktur gegeben, da alle Einbauten und entsprechenden Trennwände, die notwendig sind, unmittelbar an den Stegen 13 und 14 angeordnet sind und keinerlei Modifikation in den Blattschalen erforderlich ist. Ein sehr großer Vorteil dieser Ausführungsform liegt in der optimalen Isolation des Vorlaufkanals im Zentrum des Rotorblatts. Der Vorlaufkanal ist dann nämlich beanstandet zu den Außenwänden bzw. den Blattschalen des Rotorblatts. Hierdurch wird ein minimaler Wärmeverlust auch bei Rotorblättern mit 40 m bis 70 m Länge erreicht. Außerdem lassen sich die Temperaturen in den einzelnen Blattnasenabschnitten 32-32'" durch entsprechende Drosselklappen bzw. Drosselklappenvorrichtungen 27 sehr genau und unabhängig voneinander steuern.

Der Warmluftstrom aus dem Vorlauf kann jeweils durch einen aus Festigkeitsgründen bevorzugt runden Durchbruch bzw. einer runden Öffnung im Steg in die Blattnase geleitet wird. Dort wird die Wärme an die Blattoberfläche übertragen und dann durch einen Rücklaufdurchbruch bzw. eine Öffnung durch den Steg in den Rücklaufkanal gelenkt. Der Rücklaufdurchbruch bzw. die Öffnung hierzu ist auch vorzugsweise rund und insbesondere vorzugsweise wie die Öffnung für den Vorlauf kreisrund ausgebildet. Die Längen der Blattnasenabschnitte 32-32'" sowie die Öffnungen sind hierbei vorzugsweise durch eine thermodynamische Rechnung zu optimieren. Für die Vorlauföffnungen 27-27'" sind Drosselklappenvorrichtungen sinnvoll einsetzbar, allerdings nicht zwingend notwendig. Für die Rücklauöffnungen sind an sich keine Drosselklappenvorrichtungen notwendig. Es sind allerdings Strömungsleitflächen 30-30" sinnvoll. Die Strömungsleitflächen, die auch als Querwände 30-30" bezeichnet werden können, trennen gleichzeitig die Blattnasenabschnitte.

Die Blattnase 18 bzw. der Blattnasenkanal 29 wird an sich nicht als Strömungskanal verwendet, sondern dient lediglich zur Übertragung der Wärme an die Blattoberfläche. Insbesondere in diesem Fall macht es Sinn, die Wärmeleitfähigkeit der Nasenschale bzw. der Außenwand zur Nase hin zu verbessern. Dies kann im einfachsten Fall durch eine im Vereisungsgebiet möglichst dünne Blattschale ohne Sandwich-Struktur erfolgen oder durch wirkungsvollere Maßnahmen wie beispielsweise die Einführung einer nach innen offenen Wabenstruktur oder einer Sandwich-Struktur, bei der die Warmluft in die Stützschicht, z.B. über Röhren mit einigen Zentimetern Durchmesser eingeleitet wird. Es können allerdings auch gezielte Wärmebrücken, z.B. geerdete Metallinlays oder ähnliches die Leitfähigkeit zur Oberfläche verbessern. Es ist ferner möglich, auf eine Enteisung des relativ unkritischen Blattinnenbereichs also zur Rotorblattwurzel hin zu verzichten.

Mit der Variante der Figuren 6 und 7 werden bessere Wirkungsgrade erreicht als mit der Variante gemäß der Figuren 1 bis 5. Die letztgenannte Variante ist jedoch besonders effektiv zur Enteisung des blattwurzelseitigen Bereichs eines großen Rotorblattes geeignet, wohingegen die erstgenannte Variante gemäß den Figuren 6 und 7 zur Enteisung des Außenbereichs eines großen Rotorblattes besonders geeignet ist.

Eine besonders vorteilhafte Ausführungsform sieht daher vor, insbesondere bei sehr tiefen Außentemperaturen, zwischen beiden Varianten umzuschalten, um mit der zur Verfügung stehenden begrenzten Heizleitung nacheinander den (blattwurzelseitigen) Innen- und den (blattspitzenseitigen) Außenbereich enteisen zu können. Das Rotorblatt gemäß den Figuren 6 und 7 weist hierzu einen geteilten Nasenkanal wie in Fig. 3 dargestellt ist, auf. Das Umschalten kann bevorzugt durch eine Klappenanordnung im Blattwurzelbereich oder der Rotornabe erfolgen, die gemeinsam mit den verstellbaren Drosselklappen die gewünschte Lenkung des Luftstroms ermöglicht. Bevorzugt sind in dieser Ausführungsform auch in den Querwänden 30 Drosselklappen angeordnet, die beim Betrieb gemäß Fig. 3 vollständig geöffnet werden.

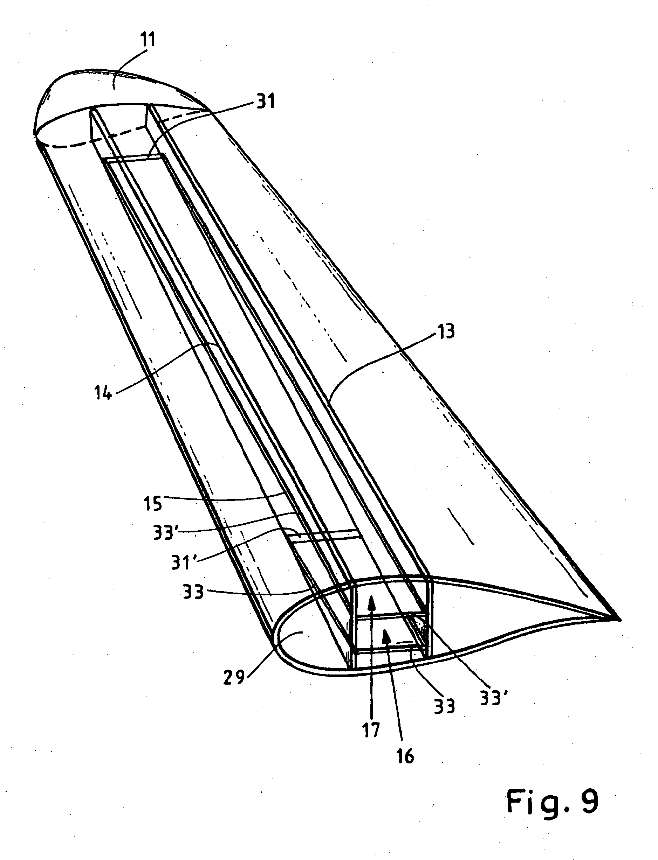

Fig. 9 zeigt eine dreidimensionale schematische "gläserne" Darstellung eines Teils eines erfindungsgemäßen Rotorblatts in einer weiteren Ausführungsform. Der besseren Darstellbarkeit wegen sind Öffnungen 34 bis 34" und Drosselklappen 27 bis 27'" weggelassen worden. Außerdem ist im Vergleich zu dem Ausführungsbeispiel der Figuren 6 und 7 die obere Abschlusswand 33' zur Rotorblattspitze 11 hin nicht nach oben zur Blattschale hin abgebogen, sondern endet mit einer Kante 31 im Bereich der Rotorblattspitze 11, wobei zur Ermöglichung eines großen Querschnitts im zweiten Kanal 17 ein großer Querschnitt zur Überführung der Luftströmung in den Nasenbereich, also in den Nasenkanal 29 im Bereich der Rotorblattspitze, vorgesehen ist. Dieses kann sowohl zur Zuführung von warmer Luft aus dem zweiten Kanal 17 in den Nasenkanal 29 vorgesehen sein als auch zur Rückführung von schon abgekühlter Luft von dem Nasenkanal 29 in den zweiten Kanal 17.

Im Gegensatz zur Ausführungsform gemäß den Figuren 6 und 7 ist die obere Abschlusswand 33' im Bereich der Rotorblattspitze 11 zur unteren Blattschale geführt. Diese Ausführungsform eignet sich besonders für einen Warmluftstrom, der durch den zweiten Kanal 17 in Richtung Rotorblattspitze 11 geführt wird und dann spätestens im Bereich der Rotorblattspitze in den Nasenkanal 29 geführt wird bzw. schon vorher durch entsprechende Öffnungen oder Strömungsdrosselvorrichtungen, die allerdings in Fig. 9 nicht dargestellt sind, um anschließend durch den ersten Kanal 16 in abgekühlter Form wieder in Richtung Rotorblattwurzel abgeführt zu werden.

Durch die Erfindung ist ein sehr einfacher Aufbau im Vergleich zu alternativen Konzepten wie Heizfolien oder Heizdrähten und Ähnlichem möglich. Außerdem ist eine einfache Integration in eine bestehende Blattstruktur möglich. Zudem kann der Warmluftstrom an verschiedene Betriebszustände und Umgebungsbedingungen einfach angepasst werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 10: Rotorblatt
- 11: Rotorblattspitze
- 12: Rotorblattwurzel
- 13: Steg
- 14: Steg
- 15: Trennwand
- 16: erster Kanal
- 17: zweiter Kanal
- 18: Rotorblattnase
- 19: Außenwand
- 20: Profil
- 21: Warmluftstrom
- 22: Kaltluftstrom
- 23, 23', 23", 23"', 23^{IV}, 23^{V},: Öffnung
- 24, 24', 24", 24"', 24^{IV}, 24^{V}: Strömungspfeile
- 25: Saugseite
- 26: Druckseite
- 27, 27', 27": Drosselklappenvorrichtung
- 28: Endkante
- 29: Nasenkanal
- 30, 30', 30": Querwand
- 31, 31': Kante
- 32, 32', 32", 32"': Abschnitt
- 33: untere Abschlusswand
- 33': obere Abschlusswand
- 34, 34', 34": Öffnung
- 35: Drosselklappe
- 36: Flansch
- 37: Klebeverbindung
- 38: Exzenter
- 39, 39': Kevlarseil
- 40: Längserstreckung
- 41, 41', 41", 41"': Öffnung
- 43, 43': Halterippe

## Patentansprüche

1. Rotorblatt (10) einer Windenergieanlage mit einem ersten und einem zweiten innen im Rotorblatt (10) verlaufenden Kanal (16, 17) zum Durchleiten eines Luftstroms (21, 22), wobei eine Trennvorrichtung (15) vorgesehen ist, die die Kanäle (16, 17) voneinander trennt, so dass der erste Kanal (16) an einer ersten Seite der Trennvorrichtung (15) zur Druckseite (26) des Rotorblatts (10) angeordnet ist und der zweite Kanal (17) an einer zweiten Seite der Trennvorrichtung (15) zur Saugseite (25) des Rotorblatts (10) angeordnet ist.

2. Rotorblatt (10) nach Anspruch 1, **dadurch gekennzeichnet, dass** die Trennvorrichtung (15) wenigstens abschnittsweise eine Trennwand ist oder umfasst, die im Wesentlichen in Längserstreckung (40) des Rotorblatts (10) und quer zu einem Steg (13, 14) des Rotorblatts (10) angeordnet ist, wobei sich der Steg (13, 14) von der Saugseite (25) zur Druckseite (26) des Rotorblatts (10) erstreckt und im Wesentlichen in Längserstreckung (40) des Rotorblatts (10) angeordnet ist.

3. Rotorblatt (10) nach Anspruch 1 oder 2, **dadurch gekennzeichnet, dass** die Kanäle (16, 17) Luftleitkanäle sind.

4. Rotorblatt (10) nach (10) einem der Ansprüche 1 bis 3, **dadurch gekennzeichnet, dass** der erste Kanal (16) und/oder der zweite Kanal (17) eine Außenwand (19) des Rotorblatts (10) als Wand aufweist, und/oder dass der erste Kanal (16) und/oder der zweite Kanal (17) wenigstens eine Öffnung (41-41"') in einer Wand (14) des ersten und/oder zweiten Kanals (16, 17) aufweist, die eine Verbindung zu einem dritten Kanal (29) ermöglicht, wobei der dritte Kanal (29) eine Außenwand (19) des Rotorblatts (10) als Wand aufweist.

5. Rotorblatt (10) nach einem der Ansprüche 1 bis 4, **dadurch gekennzeichnet, dass** der erste Kanal (16) und/oder der zweite Kanal (17) zwischen zwei Stegen (13, 14) des Rotorblatts (10) angeordnet ist, wobei die Stege (13, 14) im Wesentlichen in Längserstreckung (40) des Rotorblatts (10) angeordnet und sich jeweils von der Druckseite (26) zur Saugseite (25) des Rotorblatts (10) erstrecken.

6. Rotorblatt (10) nach einem der Ansprüche 1 bis 5, **dadurch gekennzeichnet, dass** wenigstens eine Wand (13, 14, 15, 33) des ersten oder des zweiten Kanals (16, 17) wenigstens abschnittsweise wärmeisoliert ausgebildet ist.

7. Rotorblatt (10) nach einem der Ansprüche 1 bis 6, **dadurch gekennzeichnet, dass** im Bereich der Nase (18) des Rotorblatts (10) das Schalenmaterial des Rotorblatts (10) mit wärmeleitfähigem Material durchsetzt ist.

8. Rotorblatt (10) nach einem der Ansprüche 1 bis 7, **dadurch gekennzeichnet, dass** der erste und/oder der zweite Kanal (16, 17) beabstandet zu den Außenwänden (19) des Rotorblatts (10) angeordnet ist.

9. Rotorblatt (10) einer Windenergieanlage mit einem ersten und einem zweiten innen im Rotorblatt (10) verlaufenden Kanal (16, 17) zum Durchleiten eines Luftstroms (21, 22), insbesondere nach einem der Ansprüche 1 bis 8, **dadurch gekennzeichnet, dass** der erste und/oder der zweite Kanal (16, 17) eine Strömungsdrosselvorrichtung (23-23V, 27, 34-34", 35, 36) aufweist, wobei die Strömungsdrosselvorrichtung (23-23^{V}, 27, 34-34", 35, 36) eine Luftstromdurchtrittsfläche (23-23^{v}, 24-24^{v}, 34-34") aufweist, die einstellbar ist.

10. Rotorblatt (10) nach Anspruch 9, **dadurch gekennzeichnet, dass** die Strömungsdrosselvorrichtung (23-23^{v}, 27, 34-34", 35, 36) in einer Außenwand (13, 14, 15, 33) und/oder einer Innenwand (31, 31') des ersten und/oder zweiten Kanals (16, 17) vorgesehen ist.

11. Verfahren zum Enteisen eines Rotorblatts (10) einer Windenergieanlage, wobei das Rotorblatt (10) einen ersten und einen zweiten Kanal (16, 17) innen im Rotorblatt (10) zum Durchleiten eines Luftstromes (21, 22) aufweist, wobei der Luftstrom (21, 22) einen erwärmten Luftstrom (21) umfasst, der in den ersten Kanal (16) eingeleitet wird und wenigstens abschnittsweise in Richtung von der Rotorblattwurzel (12) zur Rotorblattspitze (11) in einer vorgebbaren Strömungsführung strömt und zum Enteisen wenigstens eines Abschnitts (32, 32', 32", 32"') des Rotorblatts (10) an wenigstens einem Teil einer Außenwand (19) des Rotorblatts (10) entlangströmt, **dadurch gekennzeichnet, dass** die Strömungsgeschwindigkeit des Luftstroms (21, 22) in dem Abschnitt (32-32"') eingestellt wird oder ist, wobei die Strömungsführung im Betrieb der Windenergieanlage verändert wird.

12. Verfahren nach Anspruch 11, **dadurch gekennzeichnet, dass** in Längserstreckung (40) des Rotorblatts (10) hintereinander angeordnete Abschnitte (32-32"') des Rotorblatts (10) zu unterschiedlichen Zeiten erwärmt werden.

13. Verfahren nach Anspruche 11 oder 12, **dadurch gekennzeichnet, dass** der Nasenbereich (18) des Rotorblatts (10) erwärmt wird.

14. Verfahren nach einem der Ansprüche 11 bis 13, **dadurch gekennzeichnet, dass** in den Kanälen (16, 17, 29) und/oder zwischen den Kanälen (14, 17, 29) Strömungsdrosselvorrichtungen (23-23^{v}, 27, 41-41") vorgesehen sind, deren Durchtrittsflächen eingestellt werden oder sind.

15. Verfahren nach einem der Ansprüche 11 bis 14, **dadurch gekennzeichnet, dass** wenigstens zeitweise, insbesondere in vorgebbaren Zeitabständen, der erwärmte Luftstrom (21) in den zweiten Kanal (17) eingeleitet wird und wenigstens abschnittsweise in Richtung von der Rotorblattwurzel (12) zur Rotorblattspitze (11) strömt und wobei der Luftstrom (22), nachdem dieser abgekühlt wurde oder ist, durch den ersten Kanal (16) zur Rotorblattwurzel (12) zurückgeführt wird, wobei insbesondere die Strömungsrichtung zeitweise umgekehrt wird.

## Claims

1. A rotor blade (10) of a wind turbine with a first and a second passage (16, 17) extending internally in the rotor blade (10) for conducting an airflow (21, 22), wherein a separating device (15) is provided, which separates the passages (16, 17) from one another, so that the first passage (16) is arranged on a first side of the separating device (15) towards the pressure side (26) of the rotor blade (10) and the second passage (17) is arranged on a second side of the separating device (15) towards the suction side (25) of the rotor blade (10).

2. A rotor blade (10) as claimed in claim 1, **characterised in that** the separating device (15) is or includes, at least in sections, a partition wall, which is arranged substantially in the longitudinal direction (40) of the rotor blade (10) and transversely to a web (13, 14) of the rotor blade (10), wherein the web (13, 14) extends from the suction side (25) to the pressure side (26) of the rotor blade (10) and is arranged substantially in the longitudinal direction (40) of the rotor blade (10).

3. A rotor blade (10) as claimed in claim 1 or 2, **characterised in that** the passages (16, 17) are air guiding passages.

4. A rotor blade (10) as claimed in one of the claims 1 to 3, **characterised in that** the first passage (16) and/or second passage (17) has an external wall (19) of the rotor blade (10) as a wall and/or that the first passage (16) and/or second passage (17) has at least one opening (41-41"') in a wall (14) of the first and/or second passage (16, 17), which enables a connection to a third passage (29), wherein the third passage (29) has an outer wall (19) of the rotor blade (10) as a wall.

5. Rotor blade (10) as claimed in one of the claims 1 to 4, **characterised in that** the first passage (16) and/or the second passage (17) is arranged between two webs (13, 14) of the rotor blade (10), wherein the webs (13, 14) are arranged substantially in the longitudinal direction (40) of the rotor blade (10) and extend in each case from the pressure side (26) to the suction side (25) of the rotor blade (10).

6. A rotor blade (10) as claimed in one of the claims 1 to 5, **characterised in that** at least one wall (13, 14, 15, 33) of the first or second passage (16, 17) is, at least in sections, heat insulated.

7. A rotor blade (10) as claimed in one of the claims 1 to 6, **characterised in that** in the region of the nose (18) of the rotor blade (10) the shell material of the rotor blade (10) is penetrated with heat conductive material.

8. A rotor blade (10) as claimed in one of the claims 1 to 7, **characterised in that** the first and/or second passage (16, 17) is arranged spaced from the outer walls (19) of the rotor blade (10).

9. A rotor blade (10) of a wind turbine with a first and a second passage (16, 17) extending internally in the rotor blade (10) for piping an airflow (21, 22) particularly as claimed in one of the claims 1 to 8, **characterised in that** the first and/or second passage (16, 17) has a flow throttling device (23-23V, 27, 34-34", 35, 36), wherein the flow throttling device (23-23^{v}, 27, 34-34", 35, 36) has an airflow area (23-23^{v}, 24-24^{v}, 34-34") which is adjustable.

10. A rotor blade (10) as claimed in claim 9, **characterised in that** the flow throttling device (23-23^{v}, 27, 34-34", 35, 36) is provided in an outer wall (13, 14, 15, 33) and/or an inner wall (31, 31') of the first and/or second passage (16, 17).

11. A method of de-icing a rotor blade (10) of a wind turbine, wherein the rotor blade (10) has a first and a second passage (16, 17) internally in the rotor blade (10) for conducting an airflow (21, 22), wherein the airflow (21, 22) includes a heated airflow (21), which is introduced into the first passage (16) and flows, at least in sections, in the direction from the rotor blade root (12), towards the rotor blade tip (11) in a predeterminable flow guide and, for the purpose of de-icing, flows along at least one section (32, 32', 32", 32"') of the rotor blade (10) on at least one portion of an external wall (19) of the rotor blade (10), **characterised in that** the flow velocity of the airflow (21, 22) is adjusted in the section (32-32"'), wherein the flow guide is altered during operation of the wind turbine.

12. A method as claimed in claim 11, **characterised in that** sections (32-32"') of the rotor blade (10), which are arranged behind one another in longitudinal direction of the rotor blade (10) are heated at different times.

13. A method as claimed in claim 11 or 12, **characterised in that** the nose region (18) of the rotor blade (10) is heated.

14. A method as claimed in one of the claims 11 to 13, **characterised in that** provided in the passages (16, 17, 29) and/or between the passages (14, 17, 29) there are flow throttling devices (23-23^{v}, 27, 41-41") whose airflow areas will be or are adjusted.

15. A method as claimed in one of the claims 11 to 14, **characterised in that** at least in certain times, particularly at predetermined time intervals, the heated airflow (21) is introduced into the second passage (17) and flows, at least in sections, in the direction from the rotor blade root (12) towards the rotor blade tip (11) and wherein the airflow (22) is conducted back, after it is or has been cooled, through the first passage (16) towards the rotor blade root (12), wherein, in particular, the flow direction is periodically reversed.

## Revendications

1. Pâle de rotor (10) d'une installation d'éolienne comprenant un premier et un deuxième canal (16, 17) passant à l'intérieur de la pâle de rotor (10) pour conduire un courant d'air (21, 22), un dispositif de séparation (15) qui sépare les canaux (16, 17) étant prévu de manière à ce que le premier canal (16) soit disposé sur un premier côté du dispositif de séparation (15) vers le côté pression (26) de la pâle de rotor (10), et le deuxième canal (17) soit disposé sur un deuxième côté du dispositif de séparation (15) vers le côté aspiration (25) de la pâle de rotor (10).

2. Pâle de rotor (10) selon la revendication 1, **caractérisé en ce que** le dispositif de séparation (15) est ou comprend une paroi de séparation, au moins par endroits, qui est disposée essentiellement dans le sens longitudinal (40) de la pâle de rotor (10) et transversalement à une entretoise (13, 14) de la pâle de rotor (10), l'entretoise (13, 14) s'étendant depuis le côté aspiration (25) vers le côté pression (26) de la pâle de rotor (10) et étant disposée essentiellement dans le sens longitudinal (40) de la pâle de rotor (10).

3. Pâle de rotor selon la revendication 1 ou la revendication 2, **caractérisée en ce que** les canaux (16, 17) sont des canaux de conduction d'air.

4. Pâle de rotor (10) selon l'une quelconque des revendications 1 à 3, **caractérisée en ce que** le premier canal (16) et/ou le deuxième canal (17) présente une paroi extérieure (19) de la pâle de rotor (10) servant de paroi, et/ou **en ce que** le premier canal (16) et/ou le deuxième canal (17) présente au moins une ouverture (41-41"') dans une paroi (14) du premier et/ou du deuxième canal (16, 17) qui permet une liaison avec un troisième canal (29), le troisième canal (29) présentant une paroi extérieure (19) de la pâle de rotor (10) servant de paroi.

5. Pâle de rotor (10) selon l'une quelconque des revendications 1 à 4, **caractérisée en ce que** le premier canal (16) et/ou le deuxième canal (17) est disposé entre deux entretoises (13, 14) de la pâle de rotor (10), les entretoises (13, 14) étant disposées essentiellement dans le sens longitudinal (40) de la pâle de rotor (10) et s'étendant respectivement depuis le côté pression (26) vers le côté aspiration (25) de la pâle de rotor (10).

6. Pâle de rotor (10) selon l'une quelconque des revendications 1 à 5, **caractérisée en ce qu'**au moins une paroi (13, 14, 15, 33) du premier ou du deuxième canal (16, 17) est isolé thermiquement, au moins par endroits.

7. Pâle de rotor (10) selon l'une quelconque des revendications 1 à 6, **caractérisée en ce que**, au niveau du nez (18) de la pâle de rotor (10), le matériau de l'enveloppe de la pâle de rotor (10) est entremêlé de matériau susceptible de conduire la chaleur.

8. Pâle de rotor (10) selon l'une quelconque des revendications 1 à 7, **caractérisée en ce que** le premier et/ou le deuxième canal (16, 17) est disposé à distance des parois extérieures (19) de la pâle de rotor (10).

9. Pâle de rotor (10) d'une installation d'éolienne comportant un premier et un deuxième canal (16, 17) passant à l'intérieur de la pâle de rotor (10) pour la conduction d'un courant d'air (21, 22), en particulier selon l'une quelconque des revendications 1 à 8, **caractérisée en ce que** le premier et/ou le deuxième canal (16, 17) présente un dispositif d'étranglement de l'écoulement (23-23^{V}, 27, 34-34", 35, 36), le dispositif d'étranglement de l'écoulement (23-23^{V}, 27, 34-34", 35, 36) présentant une surface de passage du courant d'air (23-23^{V}, 24-24^{V}, 34-34") réglable.

10. Pâle de rotor (10) selon la revendication 9, **caractérisée en ce que** le dispositif d'étranglement de l'écoulement (23-23^{V}, 27, 34-34", 27, 34-34", 35, 36) est prévu dans une paroi extérieure (13, 14, 15, 33) et/ou dans une paroi intérieure (31, 31') du premier et/ou du deuxième canal (16, 17).

11. Procédé de dégivrage d'une pâle de rotor (10) d'une installation d'éolienne, la pâle de rotor (10) présentant un premier et un deuxième canal (16, 17) à l'intérieur de la pâle de rotor pour la conduction d'un courant d'air (21, 22), le courant d'air (21, 22) comprenant un courant d'air chauffé (21) introduit dans le premier canal (16) et s'écoulant, au moins par endroits, depuis le départ (12) de la pâle de rotor vers la pointe (11) de la pâle de rotor dans un guidage prédéfinissable de l'écoulement et, pour le dégivrage d'au moins un tronçon (32, 32', 32", 32"') de la pâle de rotor (10), s'écoule le long d'au moins une partie d'une paroi extérieure (19), **caractérisé en ce que** la vitesse d'écoulement du courant d'air (21, 22) est réglée dans le tronçon (32-32"'), le guidage de l'écoulement étant modifié pendant le fonctionnement de l'installation d'éolienne.

12. Procédé selon la revendication 11, **caractérisé en ce que**, dans le sens longitudinal (40) de la pâle de rotor (10), des tronçons (32-32"') de la pâle de rotor (10), disposés l'un derrière l'autre, sont chauffés à des moments différents.

13. Procédé selon la revendication 11 ou 12, **caractérisé en ce que** la zone du nez (18) de la pâle de rotor (10) est chauffée.

14. Procédé selon l'une quelconque des revendications 11 à 13, **caractérisé en ce que**, dans les canaux (16, 17, 29) et/ou entre les canaux (14, 17, 29), il est prévu des dispositifs d'étranglement de l'écoulement (23-23^{V}, 27, 41-41") dont les surfaces de passage sont réglées.

15. Procédé selon l'une quelconque des revendications 11 à 14, **caractérisé en ce qu'**au moins par moment, en particulier à des intervalles de temps prédéfinissables, le courant d'air chauffé (21) est introduit dans le deuxième canal (17) et s'écoule depuis le départ (12) de la pâle de rotor vers la pointe (11) de pâle de rotor et le courant d'air (22), après avoir été ou être refroidi, est recirculé à travers le premier canal (16) vers le départ (12) de la pâle de rotor en particulier le sens d'écoulement étant inversé par moment.
